# EUROPEAN PATENT APPLICATION

(11) **EP 3 958 154 A1**
(43) Date of publication of application: **23.02.2022**
(21) Application number: 21186793.2
(22) Date of filing: 20.07.2021
(51) Int. Cl.: G06F 21/57, G06F 21/72, G06F 21/78, G06F 21/79

(54) **SYSTEM AND METHOD FOR DYNAMICALLY SECURING SOFTWARE**

(30) Priority: 20.08.2020 EP 20191918
(71) Applicant: Argus Cyber Security Ltd, 6789155 Tel Aviv (IL)
(72) Inventor: Ezra, Shiran, 90411 Nürnberg (DE); Roth, Gilad, 90411 Nürnberg (DE); Kaneti, Liron, 90411 Nürnberg (DE)
(74) Representative: Continental Corporation

(57) **Abstract**

A system and method for booting a computing device may include, during a boot process of the device: preventing access to a set of storage blocks including a software object; selectively validating one or more storage blocks in the set; and enabling access to validated storage blocks.

## Description

### FIELD OF THE INVENTION

The present invention relates generally to dynamically securing software. More specifically, the present invention relates to dynamically validating software during a boot sequence or process.

### BACKGROUND OF THE INVENTION

Boot is an initialization process performed by a computing device when turned (powered) on. Reducing boot (or controller initialization) time is a key challenge when it comes to components in vehicles where it is essential that immediately after a vehicle is started, electronic control units (ECUs) are fully functional and operative.

On the other hand, with the introduction of computerized components (e.g., ECUs) into vehicles, security has become a major concern in modern vehicles. However, as done by known or current systems and methods, validating or verifying software integrity prior to performing a boot sequence extends the boot time and thus delays the point in time when, after a vehicle is started, the vehicle is fully operative and functional.

Accordingly, there is a need in the art for a system and method that can provide a secured boot sequence where integrity of software is validated or verified before the software is executed while maintaining the boot time at a minimum.

### SUMMARY OF THE INVENTION

A system and method for booting a computing device may include preventing access to a set of storage blocks including a software object; selectively validating one or more storage blocks in the set; and enabling access to validated storage blocks. Validating a storage block may be done upon detecting an attempt or need to access the block. Validating a storage block may be done in the background.

Validating a storage block may be done by a hardware security module (HSM). A system and method may analyze a set of code segments and identify a relation between first and second code segments included in the set. The system and method may place the first and second code segments in a software object such that, when the software object is stored in a memory of a computing device, the first and second code segments are included in a single storage block of the memory. A system and method may enable or disable access to storage blocks by dynamically configuring a memory protection unit (MPU). A method may include compiling or linking first and second code segments such they are included in the same, single storage block of a memory of a target device.

A system and method may include determining a first time interval between a reference time and a time one or more storage blocks in a group of storage blocks is validated during a boot process; determining a second time interval between the reference time and a time when a code segment is accessed during the boot process; and if the second time interval is less then, or equal to, the first time interval, then placing the code segment in one of the storage blocks in the group. Other aspects and/or advantages of the present invention are described herein.

### BRIEF DESCRIPTION OF THE DRAWINGS

Non-limiting examples of embodiments of the disclosure are described below with reference to figures attached hereto that are listed following this paragraph. Identical features that appear in more than one figure are generally labeled with a same label in all the figures in which they appear. A label labeling an icon representing a given feature of an embodiment of the disclosure in a figure may be used to reference the given feature. Dimensions of features shown in the figures are chosen for convenience and clarity of presentation and are not necessarily shown to scale. For example, the dimensions of some of the elements may be exaggerated relative to other elements for clarity, or several physical components may be included in one functional block or element. Further, where considered appropriate, reference numerals may be repeated among the figures to indicate corresponding or analogous elements.

The subject matter regarded as the invention is particularly pointed out and distinctly claimed in the concluding portion of the specification. The invention, however, both as to organization and method of operation, together with objects, features and advantages thereof, may best be understood by reference to the following detailed description when read with the accompanied drawings. Embodiments of the invention are illustrated by way of example and not limitation in the figures of the accompanying drawings, in which like reference numerals indicate corresponding, analogous or similar elements, and in which:
Fig. 1 shows a block diagram of a computing device according to illustrative embodiments of the present invention;
Fig. 2 shows a system according to illustrative embodiments of the present invention;
Fig. 3A shows an image object according to prior art;
Fig. 3B shows arrangement of content in a memory according to prior art;
Fig. 3C shows an image object according to illustrative embodiments of the present invention;
Fig. 3D shows arrangement of content in a memory according to illustrative embodiments of the present invention;
Fig. 4 shows time line information according to illustrative embodiments of the present invention; and
Fig. 5 shows a flow according to illustrative embodiments of the present invention.

### DETAILED DESCRIPTION

In the following detailed description, numerous specific details are set forth in order to provide a thorough understanding of the invention. However, it will be understood by those skilled in the art that the present invention may be practiced without these specific details. In other instances, well-known methods, procedures, and components, modules, units and/or circuits have not been described in detail so as not to obscure the invention. Some features or elements described with respect to one embodiment may be combined with features or elements described with respect to other embodiments. For the sake of clarity, discussion of same or similar features or elements may not be repeated.

Although embodiments of the invention are not limited in this regard, discussions utilizing terms such as, for example, "processing," "computing," "calculating," "determining," "establishing", "analyzing", "checking", or the like, may refer to operation(s) and/or process(es) of a computer, a computing platform, a computing system, or other electronic computing device, that manipulates and/or transforms data represented as physical (e.g., electronic) quantities within the computer's registers and/or memories into other data similarly represented as physical quantities within the computer's registers and/or memories or other information non-transitory storage medium that may store instructions to perform operations and/or processes. Although embodiments of the invention are not limited in this regard, the terms "plurality" and "a plurality" as used herein may include, for example, "multiple" or "two or more". The terms "plurality" or "a plurality" may be used throughout the specification to describe two or more components, devices, elements, units, parameters, or the like. The term set when used herein may include one or more items.

Unless explicitly stated, the method embodiments described herein are not constrained to a particular order in time or to a chronological sequence. Additionally, some of the described method elements can occur, or be performed, simultaneously, at the same point in time, or concurrently. Some of the described method elements may be skipped, or they may be repeated, during a sequence of operations of a method.

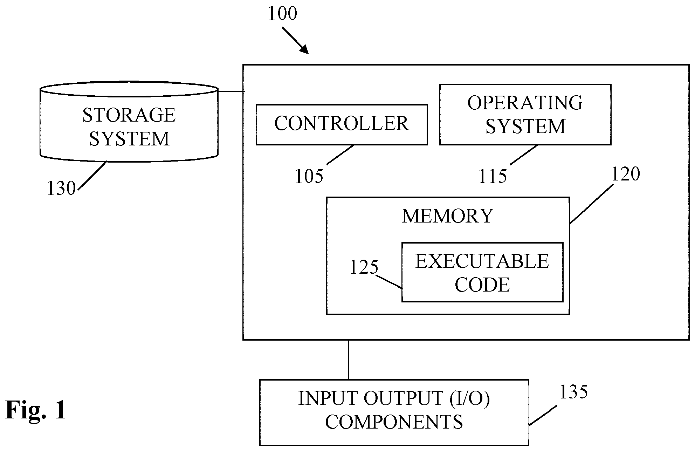

Reference is made to Fig. 1, showing a non-limiting, block diagram of a computing device or system 100 that may be used by, or included in, a system according to some embodiments of the present invention. For example, computing device may be an ECU installed in a vehicle, e.g., an ECU 250 as further described herein.

Computing device (or system) 100 may include a controller 105 that may be a hardware controller. For example, computer hardware processor or hardware controller 105 may be, or may include, a central processing unit processor (CPU), a chip or any suitable computing or computational device. Computing system 100 may include a memory 120, an operating system (OS) 115, executable code 125, a storage system 130 and input/output (I/O) components 135. Controller 105 (or one or more controllers or processors, possibly across multiple units or devices) may be configured (e.g., by executing software or code) to carry out methods described herein, and/or to execute or act as the various modules, units, etc., for example by executing software or by using dedicated circuitry. More than one computing devices 100 may be included in, and one or more computing devices 100 may be, or act as the components of, a system according to some embodiments of the invention.

OS 115 may be or may include any code segment (e.g., one similar to executable code 125 described herein) designed and/or configured to perform tasks involving coordination, scheduling, arbitration, supervising, controlling or otherwise managing operation of computing device 100, for example, scheduling execution of software programs or enabling software programs or other modules or units to communicate. OS 115 may be a commercial operating system, e.g., QNX or Linux.

Memory 120 may be a hardware memory. For example, memory 120 may be, or may include machine-readable media for storing software e.g., a Random-Access Memory (RAM), a read only memory (ROM), a memory chip, a flash memory (referred to herein as flash), a volatile and/or non-volatile memory or other suitable memory units or storage units. Memory 120 may be or may include a plurality of, possibly different memory units. Memory 120 may be a computer or processor non-transitory readable medium, or a computer non-transitory storage medium, e.g., a RAM. Some embodiments may include a non-transitory storage medium having stored thereon instructions which when executed cause the processor to carry out methods disclosed herein.

Executable code 125 may be software, an application, a program, a process, task or script. A program, application or software as referred to herein may be, or may include, any type of instructions, e.g., a program, application may be, or may be included in, firmware, middleware, microcode, hardware description language etc. that, when executed by one or more hardware processors or controllers 105, cause a processing system or device (e.g., system 100) to perform the various functions described herein.

Executable code 125 may be executed by controller 105 possibly under control of operating system 115. For example, executable code 125 may code that causes controller 105 to dynamically secure software as further described herein.

. Although, for the sake of clarity, a single item of executable code 125 is shown in Fig. 1, a system according to some embodiments of the invention may include a plurality of executable code segments similar to executable code 125 (e.g., in a plurality of ECUs) that may be loaded into memories 120 and cause controllers 105 to carry out methods described herein.

Storage system 130 may be or may include, for example, a hard disk drive (e.g., connected to a server), a universal serial bus (USB) device, a flash memory or unit (e.g., in an ECU), or any other suitable removable and/or fixed storage unit. In some embodiments, some of the components shown in Fig. 1 may be omitted. For example, in an ECU, storage system 130 may be an internal, non-volatile memory (e.g., a flash memory) that may be viewed as part of memory 120 in an ECU. Accordingly, although shown as a separate component, storage system 130 may be embedded or included in system 100.

I/O components 135 may be, may be used for connecting (e.g., via included ports), or they may include: a mouse, screen and a keyboard (e.g., in a server) or any suitable input device. Any applicable I/O components may be connected to computing device 100 as shown by I/O components 135, for example, a wired or wireless network interface card (NIC), a universal serial bus (USB) device or an external hard drive may be included in I/O components 135.

A system according to some embodiments of the invention may include components such as, but not limited to, a plurality of central processing units (CPU) or any other suitable multi-purpose or specific processors, controllers, microprocessors, microcontrollers, field programmable gate arrays (FPGAs), programmable logic devices (PLDs) or application-specific integrated circuits (ASIC). A system according to some embodiments of the invention may include a plurality of input units, a plurality of output units, a plurality of memory units (e.g., memory 120 in an ECU may include a flash memory and a RAM), and a plurality of storage units. A system may additionally include other suitable hardware components and/or software components. In some embodiments, a system may include, for example, a server computer, a network device and any number of devices, e.g., internet of things (IoT) devices, ECUs in a vehicle, e.g., ECUs included in a car, a train, a boat or an airplane.

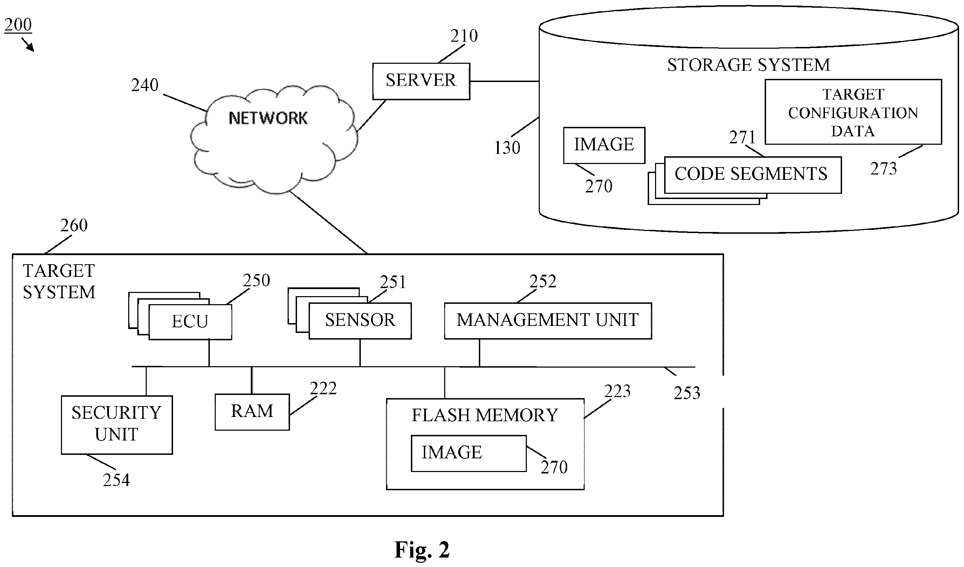

Reference is made to Fig. 2 which shows a system 200 according to illustrative embodiments of the present invention. As shown, system 200 may include a target system 260 that may include a plurality of ECUs 250, a security unit 254, a plurality of sensors 251 and a management unit 252 and an in-vehicle network or bus 253. As further shown, target system 260 may include a RAM 222 and a flash memory 223. Although for the sake of clarity and simplicity, RAM 222, security unit 254 and a flash memory 223 are shown as separate units (external to ECUs 250, sensors 251 and management unit 252) and connected to in-vehicle network 253, it will be noted that RAM 222 units, security units 254 and/or a flash memory 223 units may be included in some, or even each of, ECUs 250, in some or all sensors 251 and in management unit 252. For example and as further described, a security unit 254 in an ECU 250 may prevent access to a set of storage blocks in a flash memory 223 which is included in the ECU, selectively validate one or more storage blocks in the set; and enable access only to validated storage blocks. Security unit 254 may be, or may include, software, hardware or a combination thereof and security unit 254 may be external to ECUs 250, e.g., it may be a central unit operatively connected to ECUs 254 or it may be internal to ECUs 250, e.g., some of ECUs 250 may include a security unit 254.

RAM 222 may be, or may include components as described with respect to memory 120. While flash memory is mainly described or referred to herein, it will be understood that any electronic, non-volatile computer storage medium adapted to store digital data and/or be electrically erased and reprogrammed may be used instead of, or in addition to, flash memory 223. As shown, flash memory 223 may include image 270, e.g., image 270 may be stored, during production, in flash memory 223 or image 270 may be downloaded or updated, from server 210 and stored in flash memory 223 of an ECU 250. For the sake of clarity, various other components which may be included in target system 260, e.g., a memory protection unit (MPU) in, or connected to, ECUs 250 and/or an HSM are not shown.

Target system 260 may be any device, system, vehicle or any other applicable entity. For example, target system 260 may be, or it may be included or embedded in, an IoT device or a vehicle, e.g., an aircraft, a car, a train or a ship. Although vehicles such as cars are mainly described herein, other vehicles such as ships, trains and aircrafts are similarly applicable, it will be understood that the scope of the invention is not limited by the type, usage or nature of target system 260.

ECUs 250 and sensors 251 may be collectively referred to hereinafter as ECUs 250 and/or sensors 251 or individually as ECU 250 and/or sensor 251, merely for simplicity purposes. For example, a sensor 251 may be an oil pressure sensor, a temperature sensor and the like, e.g., when an embodiment is, or is included in, a train or car or other vehicle. When an embodiment is included in an airplane, ship or spacecraft, an ECU 250 may be a line-replaceable unit (LRU), a lower line-replaceable unit (LLRU), a line-replaceable component (LRC), or a line-replaceable item (LRI) component. When an embodiment is included in an airplane, ship or spacecraft, a sensor 251 may be a unit that senses or measures, for example, elevation, acceleration, air speed or flow and the like.

In-vehicle network 253 may be any suitable network that enables ECUs 250, sensors 251 and management unit 253 to communicate or exchange digital information. In-vehicle network 253 may be, may include or may comprise any suitable network infrastructure and support any suitable protocol, e.g., Ethernet, CAN, IP, TCP and the like. Accordingly, numerous elements of in-vehicle network 253 are implied but not shown, e.g., switches, routers, gateways etc. It will be recognized that embodiments of the invention are not limited by the nature of in-vehicle network 253.

Network 240 may be any suitable network that enables server 21 and target device 220 to communicate or exchange digital information. Network 240 may be, may comprise or may be part of a private or public IP network, or the internet, or a combination thereof. Additionally, or alternatively, network 240 may be, comprise or be part of a global system for mobile communications (GSM) network. For example, network 240 may include or comprise an IP network such as the internet, a GSM related network and any equipment for bridging or otherwise connecting such networks as known in the art. In addition, network 240 may be, may comprise or be part of an integrated services digital network (ISDN), a public switched re telephone network (PSTN), a public or private data network, a local area network (LAN), a metropolitan area network (MAN), a wide area network (WAN), a wireline or wireless network, a local, regional, or global communication network, a satellite communication network, a cellular communication network, any combination of the preceding and/or any other suitable communication means. Accordingly, numerous elements of network 240 are implied but not shown, e.g., access points, base stations, communication satellites, GPS satellites, routers, telephone switches, etc. It will be recognized that embodiments of the invention are not limited by the nature of network 240. Server 210 may be a server as known in the art. As shown, server 210 may be operatively connected (e.g., directly or over a network) to a storage system 130.

As further shown, system 200 may include storage system 130 that may include a target configuration data (TCD) 273, an image 270 and a plurality of code segments 271 (collectively referred to hereinafter as images 270 or code segments 271 or individually as an image or binary 270 or a code segments 271, merely for simplicity purposes). The terms "binary" and "image" as used in this application refer to software and possibly additional data used for operating a computing device, for example, an image may be sent from a server to a remote device or ECU where it may be used and/or executed by a controller 105 on the remote device or ECU. Generally, an image includes all the software, data, metadata and configuration data needed by an ECU in order for the ECU to operate as designed. For example, an image typically includes a set of functions, routines or applications as well as configuration data or other metadata used by an ECU (or by a controller 105 in an ECU) when operating. For example, an image may include a boot loader, an operating system, configuration data, lists or tables and code segments 271.

TCD 273 may be an object that includes information related to target system 260. For example, the block sizes used in flash memories 223 of ECUs in target system 260 may be recorded or included in TCDs 273. For example, TCD 273 may include, for some or all ECUs 250 in target system 260, the type, model, characteristics or version of controller 105 in the ECU (e.g., computational capacity, CPU clock etc.)), the type and version of an OS 115 of the ECU 250, the characteristics of included components such as HSM and MPU (for clarity, not shown in the drawints), or whether or not such or other components are included in ECUs 250. Any other information related to target system 260 may be included in TCD 273, e.g., a memory size (e.g., size or capacity of RAM 222 and/or of flash memory 223) of ECUs, CPU clock, hardware version and the like. For the sake of clarity, only a single TCD 273 is shown in Fig. 2, however, it will be understood that any number of TCD 273 may be stored in storage system 130, e.g., a TCD 273 for each ECU 250 may be stored in storage system 130 wherein each TCD 273 describes or characterizes a different ECU 250. Generally, a TCD 273 includes a description of a component (e.g., ECU 250 or sensor 251) where the description includes any attribute, characteristic or other description of the component.

Code segments 271 may be similar to executable code 125, for example, a first code segment 271 may be an application, function or routine which, when executed by a controller 105 in an ECU 250, causes the controller 105 to handle messages received from in-vehicle network 253, a second code segment 271 may be called, by a controller 105 in an ECU 250 when the ECU needs to handle an infotainment system, a third code segment 271 may be used, by a controller 105 in an ECU in order to initialize a wireless communication component and so on. Code segments 271 may be, or they may include, configuration data, e.g., constants, thresholds values or other data, possibly in the form of lists or tables and the like.

Image 270 may be created by packing together a number of code segments 271 such that the image 270 includes all data, metadata and executable code needed by an ECU 250 in order to properly function. Although a single image 270 is shown in Fig. 2, it will be understood that server 210 may create any number of different images 270 for any number of ECUs 250, e.g., depending on the tasks an ECU 250 is to perform, a set of code segments 271 may be selected and included in an image 270 which may then be downloaded or otherwise provided to the ECU.

Image 270 and code segments 271 may be any suitable digital data structures, constructs or computer data objects. For example, image 270 and code segments 271 may be, or may be stored or included in, files in storage system 130. Image 270 and code segments 271 may be, or they may include, executable code 125, data and metadata.

For example, code segments 271 may be executable code that can be executed by a controller 105 in an ECU 250 and/or in a sensor 251 and/or a controller 105 in management unit 252. Content in storage system 130, e.g., image 270, may be sent, downloaded or otherwise provided to components in target system 260. For example, an image 270 may be downloaded, sent or provided, e.g., over the air as known in the art, by server 210 to target system 260 where it may be stored, e.g., in flash 223 in one or more ECUs 250.

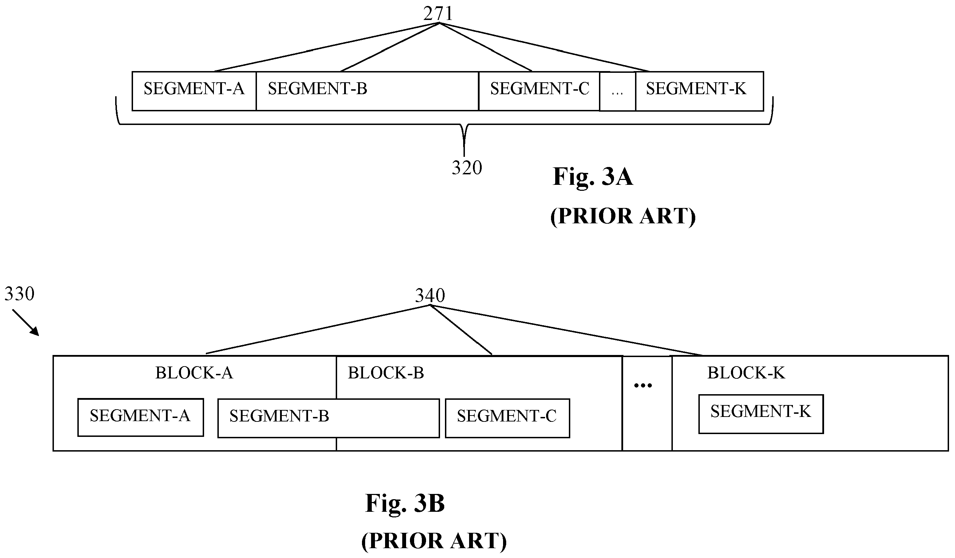

Reference is made to Fig. 3A showing an image 320 including a plurality of code segments 271 according to prior art. For example, segments 271 segment-A, segment-B and so on may be some of code segments 271 packed together into an image object that may be provided to an ECU 250. Reference is additionally made to Fig. 3B which illustrates an arrangement or storage of image 320 in a memory 330 having a plurality of blocks 340 according to prior art. For example, memory 330 may be flash memory 223 in an ECU 250. When used with reference, in relation, or with respect, to storage (e.g., with reference or in relation to memory 330 or to flash memory 223), the terms "storage block", "block", "page" and "portion" may relate to an amount (chunk) of data. Where applicable, the terms "block", "page", "portion" and "segment" may mean the same thing and may be used herein interchangeably.

As known in the art, a memory unit (e.g., flash memory 223) may be designed or adapted to work with a specific block size, for example, operations such as read and write data from flash 223 may be done in chunks or blocks of 512 bytes. Similarly, access permissions may be set at block level, e.g., an embodiment may prevent access to a first block in flash memory 223 while enabling (or permitting) access to a second, different block in flash memory 223. For example, as illustrated in Fig. 3B, when image 320 is stored in a memory 330, a first part of code segment 271 segment-B is stored in block-A of memory 330 and a second part of segment-B is stored in in block-B of memory 330.

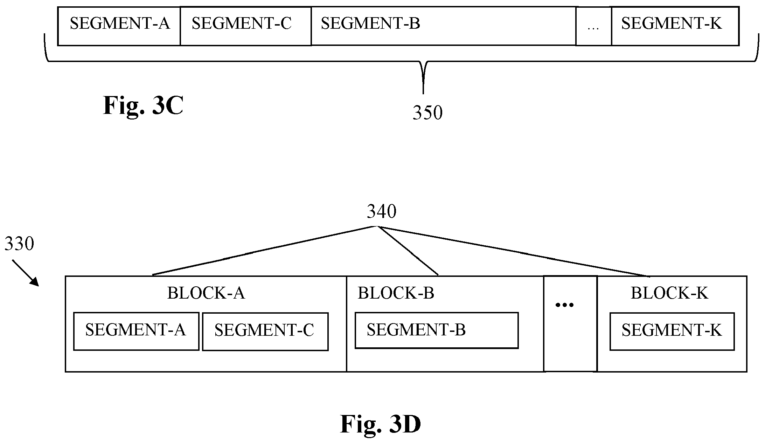

Reference is made to Fig. 3C showing an image 350 including a plurality of code segments 271. As shown, with respect to image 320, image 350 may be created by swapping the locations or placement of segments segment-B and segment-C such that segment-C is placed right after segment-A in image 350 and segment-B is placed after segment-C. Reference is additionally made to Fig. 3D which illustrates an arrangement or storage of image 350 in a memory 330 having a plurality of blocks 340. As shown, by selecting a specific order or relative offset for code segments 271 in an image 350, an embodiment may guarantee that a code segment 271 will be stored in a single block of a memory in an ECU. For example, as illustrated by Fig. 3D, by arranging code segments according to a block size of memory 330, segment-C is fully included in a single block 340 of memory 330 as oppose to being stored in two blocks as illustrated by Fig. 3B. For example, server 210 may know the block size of flash memory 223 in a specific ECU 250 and, accordingly, server 210 may arrange code segments 271 in an image 270 such that specific code segments 271 are stored in one, single block 340 of the ECU 250. An advantage of arranging code segments 271 in an image 350 may readily appreciated by those with skill in the art. For example, as known in the art, an MPU may be efficiently used to control access rights at block level, e.g., an MPU enables preventing access to a first block 340 and enabling access to a second, different block 340. Accordingly, by storing a code segment 271 (e.g., a function or an application) in a single block, and recording a reference to the block in association with a reference to the code segment 271, embodiments of the invention can dynamically, efficiently and selectively, control access rights to applications, functions or data in an image 350 stored in an ECU 250. For example, an embodiment may dynamically, at run time, on-the-fly, while an ECU 250 is operating, control access to functions, application, routines and/or configuration data in the flash memory 223 of the ECU, by simply commanding an MPU to set or change access rights to blocks 340 of flash memory 223. Similarly, for example, in order to dynamically, efficiently and selectively validate applications, functions or data in an image 350, embodiments of the invention may command or control, at block level, an HSM as further described.

As used herein, the terms "validate", "verify", "authenticate" and "certify" may relate to any operation related to determine an integrity of data in a memory 330, e.g., in flash memory 223 in an ECU 25. For example, validating a block 340 may include comparing a calculated hash value to a stored hash value, comparing a calculated cyclic redundancy check (CRC) to a stored CRC value and the like. Generally, any operation that indicates data in a memory 330 (e.g., a segment, part or portion of image 350) is as expected, e.g., the data is as stored, sent or provided by server 210. The terms "validate", "verify", "certify" and "authenticate" may be used herein interchangeably.

In some embodiments, an image (e.g., image 350) may be analyzed in order to determine and record a relevant timeline, e.g., based on an analysis of image 350, an embodiment may record a list of functions and/or a respective list of code segments 271, according to a chronological order. For example, image 350 may be stored in flash memory 223 of an ECU 250 (or a simulation of an ECU 250), in a lab, a reference time may be set to be the time of starting, initializing or powering on, the ECU 250, and the time (relevant time or time interval after which) functions or routines in image 350 are called or invoked may be recorded. Similarly, the time (relevant time or time interval after which) configuration data, metadata or other information in image 350 are accessed, e.g., read or written, may be recorded. Recording a timeline as described may include recording references to relevant blocks 340. Accordingly, an embodiment may determine a timeline at block level.

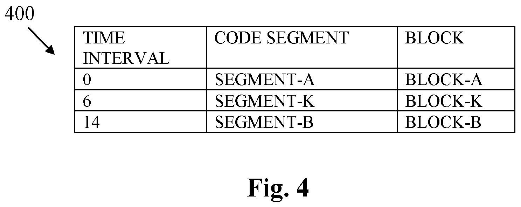

Reference is made to Fig. 4 which shows a representation of a time that may be determined and recorded by some embodiments of the invention. For example and as shown, an analysis (or timeline analysis) of image 350 may indicate that code in segment-A, stored in block block-A, is the first code executed by ECU 250 when turned or powered on (indicated by a reference time of zero ("0")), next, six milliseconds later, a function or data in segment-K stored in block-K is accessed and/or executed and then, fourteen milliseconds from the reference time, segment-B in block-B is accessed or executed. Table 400, or any other representation of information in table 400 may be provided to ECUs 250, sensors 251 and/or management unit 252 in target or remote system 260. Of course, different timeline data may be created, and provided to, different ECUs in target system 260 by analyzing their respective images 350 as described.

Some embodiments may, during a boot process of a device: prevent access to a set of storage blocks including a software object; selectively validate one or more storage blocks in the set; and enable access to validated storage blocks. The terms "boot", "boot process" and "boot sequence" as used herein may relate to any process, flow or sequence of events or actions that occur before a component reaches or assumes a predefined operational state. For example, a boot process may defined to be the flow that starts when power is provided to a component (e.g., to a controller 105 of ECU 250) and, as defined, the boot process may end when the ECU is considered functional, e.g., when a specific set of (possibly critical) functions or programs are running (executed by controller 105). Otherwise described, a boot or boot sequence or process may be any stage or phase, possibly defined by a human, e.g., a boot process may be defined as the process that executes a set of functions, a boot process, stage or phase that brings an ECU to a specific operational state or a boot may be the process of executing a specific set of critical functions.

For example, referring to the example of a timeline in table 400, a security unit 254 (e.g., included in segment-A) may, upon an initialization or power on of an ECU 250, command or cause an MPU in target system 260 to disable or prevent access to block-B and to block-K, or even to all blocks in flash memory 223 of the ECU. Next, security unit 254 may validate block-K, e.g., since this is the block that will be accessed next (six milliseconds from boot start or power on). If block-K is indeed validated, e.g., security unit 254 determines that software and/or data in block-K is as expected (was not tampered with) then security unit 254 may cause or command the MPU to enable access to block-K.

Accordingly, an embodiment may validate blocks according to an access or execution time line. Specifically, selectively validating one or more storage blocks in a set of storage blocks (and enabling access to blocks which are validated) may be done, e.g., by security unit 254, according to an order that is different from the physical order of blocks in a memory. For example, although, with respect to the first physical or relative address in memory 330 (e.g., physical offset or address 0×80000000 or relative address or offset 0×00000000), block-K is physically located after block-B in memory 330, security unit 254 may validate block-K before it validates block-B, e.g., because during a boot sequence or process of ECU 250, software and/or data in block-K are needed and/or accessed before software or data in block-B are required or accessed.

The advantage of selectively and dynamically, validating blocks and enabling access to validated blocks according to an execution or access time line as described may be readily appreciated. For example, since current or known systems validate blocks according to, for example, their physical location in a memory, current systems have two bad choices, either extend the boot process time or execute (or access) unvalidated code (or data). In contrast, by selectively validating code or data segments as described, embodiments of the invention can guarantee only validated code/data is executed/accessed while maintaining a boot time at a minimum.

Some embodiments may validate a storage block upon detecting an attempt or need to access the block. For example, security unit 254 may detect (e.g., receive a signal from OS 115) an attempt to access a block in flash memory 223, may suspend the attempted access, validate the block, command an MPU to enable access to the block and then resume the attempted access. Accordingly, while providing a fast secure boot as described, embodiments of the invention may further allow for on-demand validation of blocks in a memory. For example, while validating blocks according to a time line as described, security unit 254 may deviate from the time line, validate (and then enable access to) a specific block to which access is requested or needed, and then resume validation of blocks according to the time line.

Some embodiments may validate storage blocks in the background. For example, while an ECU 250 is already running, security unit 254 may, in the background or in parallel, validate blocks in flash memory 223, e.g., blocks that were not yet accessed (or even ones that may not be accessed at all), e.g., in a specific run of ECU 250.

In some embodiments, validating blocks may be done using an HSM. As known in the art, an HSM may be a dedicated unit that may be utilized in order to quickly and efficiently validate data blocks. For example, having commanded or caused an MPU to disable access to a data block in flash memory 223, security unit 254 may command or cause an HSM to validate the block and next, e.g., upon being informed by the HSM that the block is validated, security unit 254 may command or cause the MPU to enable access to the block.

A system and method according to some embodiments may group together segments 271 of image 350 such that, when image 350 is stored in a memory 330 of an ECU 250, the grouped segments 271 are included in one block 340.

For example, some embodiments may analyze a set of code segments 271; identify a relation between first and second code segments 271 included in the set; and place the first and second code segments 271 in a software object (e.g., in image 350) such that when the software object is stored in a memory of a computing device (e.g., in a memory of an ECU 250 or an IoT device), the first and second code segments are included in a single, same storage block of the memory. For example, based on an execution/access time line determined as described or by analyzing code in segment-A, an embodiment may determine that a function in segment-A calls or invokes a function in segment-C, that is, a relation (or time relation) between segment-A and segment-C may be identified. In such case, an embodiment may place code segments segment-A and segment-C, in image 350, such that they are stored in the same block in flash memory 223 of ECU 250, e.g., as illustrated in Fig. 3D. The advantage of grouping together related code segments into the same blocks as described may be readily appreciated. For example, grouping functions (in grouped segments) in specific or same blocks enables an optimal validation order, at block level, that is, such grouping guarantees that, during a boot process, time is not spent on validating blocks which include segments that may be required at a much later stage of the boot sequence, instead of spending the time for validating segments that will be required sooner or earlier in the boot sequence.

As described, in some embodiments enabling access to storage blocks may include dynamically configuring an MPU. For example, security unit 254 may, at first, cause an MPU to prevent or disable access to a set of blocks 340, e.g., to blocks block-B through block-K and, security unit 254 may then dynamically and selectively, as blocks are validated, cause the MPU to stop blocking access to selected blocks 340 to thus enable access to validated blocks 340.

Some embodiments may include, compiling or linking first and second code segments 271 such they are included in the same, single storage block. For example, having determined an execution time line as described, an embodiment may select to compile and/or link segment-A and segment-C into a single object such that they are stored, as a unit, in the same block, e.g., as shown in Fig. 3D. Compiling may be a process of transforming statements written according to a programming language into machine code or language. Linking may be a process of combining one or more object files (e.g., generated by a compiler) into one, executable program or object. For example, code segments 271 segment-A and segment-C may be compiled and/or linked such that they are included in a single object that may fit into a block 340 in flash memory 223 of an ECU 250.

Some embodiments may determine a first time interval between a reference time and a time one or more memory storage blocks in a group of storage blocks is validated, during a boot process; determine a second time interval between the reference time and a time when a code segment is accessed and/or executed, for the first time, during the boot process; and, if the second time interval is less then, or equal to, the first time interval, then some embodiments may place the code segment in one of the storage blocks in the group. Accordingly, some embodiments of the invention may place code, e.g., in an image 350 such that it is guaranteed that before the code is accessed, for the first time during a boot process, the code is already validated (since the block storing the code is validated).

In some embodiments, possibly in addition to recording an execution or access time line as illustrated by Fig. 4 and described herein, a validation time line may be determined and recorded. A validation time line may include the chronological order according to which blocks are validated. For example, using an ECU 250 (or a simulation of an ECU 250), in a lab, a reference time may be set to be the time of starting, initializing or powering on, the ECU 250, and the time (relevant time or time interval after which), an HSM may be caused to validate blocks, either according to an execution order or any other order, and time some, or even all, blocks flash memory 223 are validated may be recorded. Provided with an execution time line and a validation time line, systems and methods according to some embodiments may arrange segments in an image such that, when the image is stored in an ECU 250, it is guaranteed that at least some of the segments (or blocks including the segments) are validated before they are accessed or executed, for the first time in each run of an ECU. The advantage of placing code segments in an image according to a validation time line may be readily appreciated. For example, if it is deterministically discovered as described that segments are validated (e.g., by an HSM) before they are accessed then an embodiment may not require an MPU in order to guarantee integrity of software and data in a memory thus increasing efficiency and reducing cost, power consumption and the like.

In some embodiments, an image 350 for a specific ECU 250 may be created based on information in a TCD 273 that describes or characterizes the specific ECU 250. For example, characteristics of controllers 105, MPUs and/or HSMs in first and second ECUs 250, as described in their respective TCDs 273, may be different, e.g., the first ECU 250 may include a powerful controller 105 and an MPU and the second ECU 250 may include an older, slower controller 105 and may not include an MPU. Using their respective TCDs 273, server 210 may determine different time lines for the first and second ECUs (e.g., two different tables 400), and, based on the different time lines, server 210 may generate two different images 350 for the two different ECUs 250. For example, the placement of segments segment-A, segment-B and so on in image 350 may be according to the block size of flash memory 223 in the target ECU (the ECU for which image 350 is created), e.g., such that specific segments are included in the same block or such that two segments are included in different blocks and not in the same block. Accordingly, an embodiment may select an order for placing code segments (e.g., segment-A, segment-B and so on) in a software object (e.g., in image 350) based on attributes of a target device, e.g., as described in the target device's TCD 273.

As described, an order by which blocks are selected for validation (e.g., as described with reference to table 400) may be set according to placement of segments in the blocks, and placement of segments in blocks may be done according to characteristics or attributes or any other data in a TCD 273. Accordingly, after preventing access to a set of storage blocks including a software object, e.g., preventing access to blocks 340, an embodiment may selectively, based on attributes of the ECU that includes image 350, validate blocks and enable access to validated blocks. For example, the order by which blocks are validated in a first ECU 250 may be different from the order by which blocks are validated (and then made accessible) in another, different ECU 250, e.g., an older model, one with an MPU and so on.

In some embodiments, e.g., when server 210 determines (from the relevant TCD 273) that an MPU is not available or included in the target ECU (e.g., the ECU type, version or model for which image 350 is created) then server 210 may add a segment that guarantees other segments are validated before they are accessed. For example, there may be a case where it is determined (e.g., in a simulation as described) that immediately after segment-A is executed, segment-B is accessed, however, when segment-A finishes its execution and segment-B needs to be accessed, an HSM in the target ECU has not yet validated block-B where segment-B is stored. In such case, an embodiment may insert segment-C into image 350 where segment-C includes code that causes a controller 105 to delay accessing block-B until an HSM validates block-B and segment-B can be safely accessed. Since the delay caused by segment-C may be set to the minimum required, e.g., set such that segment-B is accessed immediately after an HSM has validated block-B, such time delay may keep the boot sequence time to a minimum while guaranteeing security and/or validation and integrity of data used or accessed by an ECU.

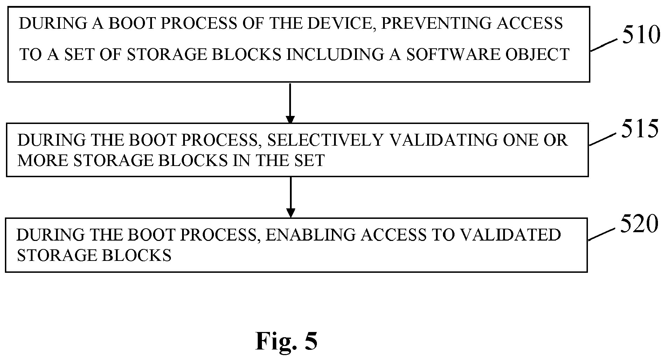

Reference is made to Fig. 5 which shows a flow or a method according to some embodiments of the invention. As shown by block 510, access to a set of storage blocks including a software object may be prevented. For example, security unit 254 may (e.g., using an MPU), block, disable or prevent access (e.g., read or execute) to blocks 340 in flash memory 223 of an ECU 250. As shown by block 520, one or more storage blocks in a set of blocks may be validated. For example, during a boot process and after blocking access to a set of blocks, security unit 254 may select to validate some of the blocks 340, e.g., the selection may be according to an order (in time) which corresponds to the order data in the blocks 340 is needed as the boot process progresses. As shown by block 530, access to validated storage blocks may be enabled. For example, having determined data in a block 340 is validated or otherwise verified the integrity of the data in the block 340, security unit 254 may enable access to the data, e.g., by commanding an MPU as described.

In the description and claims of the present application, each of the verbs, "comprise" "include" and "have", and conjugates thereof, are used to indicate that the object or objects of the verb are not necessarily a complete listing of components, elements or parts of the subject or subjects of the verb. Unless otherwise stated, adjectives such as "substantially" and "about" modifying a condition or relationship characteristic of a feature or features of an embodiment of the disclosure, are understood to mean that the condition or characteristic is defined to within tolerances that are acceptable for operation of an embodiment as described. In addition, the word "or" is considered to be the inclusive "or" rather than the exclusive or, and indicates at least one of, or any combination of items it conjoins.

Descriptions of embodiments of the invention in the present application are provided by way of example and are not intended to limit the scope of the invention. The described embodiments comprise different features, not all of which are required in all embodiments. Some embodiments utilize only some of the features or possible combinations of the features. Variations of embodiments of the invention that are described, and embodiments comprising different combinations of features noted in the described embodiments, will occur to a person having ordinary skill in the art. The scope of the invention is limited only by the claims.

While certain features of the invention have been illustrated and described herein, many modifications, substitutions, changes, and equivalents may occur to those skilled in the art. It is, therefore, to be understood that the appended claims are intended to cover all such modifications and changes as fall within the true spirit of the invention.

Various embodiments have been presented. Each of these embodiments may of course include features from other embodiments presented, and embodiments not specifically described may include various features described herein.

## Claims

1. A method of booting a computing device (100), the method comprising:
during a boot process of the device (100):
preventing access to a set of storage blocks (340) including a software object;
selectively validating one or more storage blocks in the set; and
enabling access to validated storage blocks.

2. The method of claim 1, comprising, validating a storage block upon detecting an attempt or need to access the block.

3. The methods of claims 1 or 2, comprising, validating additional storage blocks in the background.

4. The methods of the preceding claims, wherein validating at least some of the storage blocks is done by a hardware security module (HSM).

5. The methods of the preceding claims, wherein enabling access to storage blocks includes dynamically configuring a memory protection unit (MPU).

6. The methods of the preceding claims, comprising, compiling or linking first and second code segments such they are included in the same, single storage block.

7. The methods of the preceding claims, comprising:
determining a first time interval between a reference time and a time one or more storage blocks in a group of storage blocks is validated during the boot process;
determining a second time interval between the reference time and a time when a code segment is accessed during the boot process; and
if the second time interval is less then, or equal to, the first time interval, then placing the code segment in one of the storage blocks in the group.

8. The methods of the preceding claims comprising, selecting an order for placing code segments in the software object based on attributes of a target device.

9. The methods of the preceding claims, wherein an order of selecting blocks for validation is based on attributes of the computing device.

10. A method of arranging code segments in a software object, the method comprising:
analyzing a set of code segments;
identifying a relation between first and second code segments included in the set; and
placing the first and second code segments in the software object according to an order of execution or access of the code segments.

11. The method of claim 10, comprising, placing the first and second code segments in the software object such that when the software object is stored in a memory of a computing device, the first and second code segments are included in a single storage block of the memory

12. The method of claim 10, comprising, placing the first and second code segments in the software according to an order by which blocks of memory that store the software image are validated.

13. The method of claim 10, comprising,
determining a first time interval between a reference time and a time one or more storage blocks in a group of storage blocks is validated during a boot process;
determining a second time interval between the reference time and a time when a code segment is accessed during the boot process; and
if the second time interval is less then, or equal to, the first time interval, then placing the code segment in one of the storage blocks in the group.

14. A computer program (125) comprising instructions which, when executed by a controller (105), cause the controller (105) to implement any of the methods of claims 1-13.

15. A system comprising:
a memory (120); and
a controller (105) configured to perform any of the methods of claims 1-13.
